# EUROPÄISCHE PATENTSCHRIFT

(11) **EP 4 573 992 B1**
(45) Veröffentlichungstag und Bekanntmachung des Hinweises auf die Patenterteilung: **30.09.2026**
(21) Anmeldenummer: 24218086.7
(22) Anmeldetag: 06.12.2024
(51) Int. Cl.: A47J 31/60

(54) **VERFAHREN ZUR REINIGUNG/ENTKALKUNG EINES HEISSGETRÄNKEBEREITERS UND HEISSGETRÄNKEBEREITER ZUR DURCHFÜHRUNG DES VERFAHRENS**
METHOD FOR CLEANING/DESCALING A HOT BEVERAGE MAKER, AND HOT BEVERAGE MAKER FOR CARRYING OUT THE METHOD
PROCÉDÉ DE NETTOYAGE/DÉCALCIFICATION D'UN PRÉPARATEUR DE BOISSONS CHAUDES ET PRÉPARATEUR DE BOISSONS CHAUDES DESTINÉ À L'EXÉCUTION DU PROCÉDÉ

(30) Priorität: 22.12.2023 DE 102023213311
(43) Veröffentlichungstag der Anmeldung: 25.06.2025
(73) Patentinhaber: BSH Hausgeräte GmbH, 81739 München (DE)
(72) Erfinder: Strobl, Robert, 83246 Unterwössen (DE); Daburger, Josef, 83313 Siegsdorf (DE)

(56) Entgegenhaltungen:
- WO-A1-2022/126199
- DE-A1- 102004 014 024
- DE-A1- 102018 214 677
- DE-U1- 202013 012 459

## Beschreibung

Die Erfindung betrifft ein Verfahren zur Reinigung und/oder Entkalkung eines Heißgetränkebereiters, das folgende Schritte umfasst: a) Aktivieren des Verfahrens zur Reinigung und/oder Entkalkung am Gerät, b) Erfassen einer benutzerseitigen Eingabe bzgl. des Verfahrens zur Reinigung und/oder Entkalkung, und c) Ausführen eines Reinigungs-/Entkalkungsprogramms, das der benutzerseitigen Eingabe zugeordnet ist. Die Erfindung betrifft außerdem einen entsprechenden Heißgetränkebereiter mit einer Aktivierungseinheit, einer Eingabeeinheit und einer Steuereinheit, insbesondere einen Kaffeevollautomaten oder eine Kapselmaschine, vorzugsweise für Haushaltszwecke.

Verfahren zur Reinigung und/oder Entkalkung eines Heißgetränkebereiters und Heißgetränkebereiter zur Durchführung solcher Verfahren sind z.B. aus der DE 10 2018 214677 A1 und der WO 2022/126199 A1 bekannt.

Die DE 202013012459 U1 beschreibt ein Reinigungssystem für eine Garvorrichtung mit Heißluftdämpfer, bei welchem der Bediener eine Mehrzahl von Parametern eines Reinigungs-Parametersatzes ändern kann. Dafür ist eine gute Sachkenntnis des Bedieners erforderlich.

Der Erfindung liegt die Aufgabe zugrunde, ein verbessertes Verfahren zur Reinigung und/oder Entkalkung eines Heißgetränkebereiters sowie einen entsprechenden Heißgetränkebereiter zur Durchführung des Verfahrens anzugeben, womit ein effizienterer Einsatz von Wirkstoffen und/ oder ein schnellerer Ablauf des Serviceverfahrens möglich ist.

Die Erfindung löst diese Aufgabe bei dem oben genannten Verfahren dadurch, dass die benutzerseitige Eingabe in der Angabe des zu verwendenden Reinigungs- und/oder Entkalkungsmittels besteht und das Reinigungs-/Entkalkungsprogramm entsprechend der benutzerseitigen Angabe ausgeführt wird.

Die meisten Heißgetränkebereiter verfügen über ein vorab angelegtes und werkseitig eingestelltes Reinigungs- und/oder Entkalkungsprogramm. Mit einem Reinigungsprogramm können insbesondere alle Fluidwege des Heißgetränkebereiters von den bei der Kaffeezubereitung anfallenden Ablagerungsprodukten wie Fetten, Ölen, Feststoffen und von Schimmelsporen, Keimen und Bakterien befreit werden. Alternativ oder zusätzlich kann mit einem Entkalkungsprogramm ein Entfernen von wasserunlöslichen Kalkablagerungen, die sich bei erhöhten Temperaturen aus Leitungswasser bilden, vorgenommen werden. Das Reinigungsprogramm und das Entkalkungsprogramm können jeweils für sich alleine oder gemeinsam angewählt und ausgeführt werden. Sind im Folgenden eines der beiden oder beide Programme ohne konkrete Unterscheidung gemeint, sind sie zusammenfassend als Serviceprogramm bzw. Serviceverfahren bezeichnet.

Das Serviceprogramm eines Heißgetränkebereiters ist in der Regel maschinenspezifisch aus- und festgelegt. Der Benutzer des Heißgetränkebereiters ist zudem nicht immer frei in der Wahl eines Reinigungs- oder Entkalkungsmittels hinsichtlich Hersteller, seiner Form (fest oder flüssig), Konzentration und chemischen Zusammensetzung. Bei Nichtbeachtung herstellerseitiger Vorgaben können sich jedoch, je nach verwendetem Mittel, suboptimale Ergebnisse zeigen. Bei Einsatz ungeeigneter Mittel können die Serviceverfahren dem Heißgetränkebereiter langfristig schaden, beispielsweise durch Korrosion an Metallen oder Beschädigungen an Dichtungen.

Das erfinderische Verfahren umfasst die Schritte a) bis c), die im Heißgetränkebereiter durchgeführt werden. Er wird im Folgenden auch als ,Heißgetränkegerät' oder vereinfacht als 'Gerät' bezeichnet.

Das Aktivieren des Verfahrens zur Reinigung und/oder Entkalkung am Heißgetränkebereiter in Schritt a) erfolgt in an sich bekannter Weise nach Einschalten des Heißgetränkebereiters durch Auswahl und Eingabe innerhalb einer Menüführung oder durch Drücken oder Drehen eines entsprechenden Knopfes. Auch eine akustische Aktivierung ist möglich. Ebenso kann das Menü des Geräts aus der Ferne, beispielsweise in einer Anwendung eines mit dem Gerät drahtlos verbundenen Smartphones ("App"), angesteuert werden.

Erfindungsgemäß besteht nun die in Schritt b) erfasste benutzerseitige Eingabe nicht in konkreten Parameterwerten, sondern in der Angabe des für den unmittelbar folgenden Servicevorgang vorgesehenen Reinigungs-/Entkalkungsmittels. Der Benutzer braucht also lediglich das Produkt selbst anzugeben, das er für das Serviceprogramm ausgewählt hat. Kenntnisse über technische, insbesondere verfahrenstechnische Zusammenhänge braucht der Benutzer dafür nicht, erhält aber dennoch ein optimales Ergebnis des anschließend durchgeführten Serviceprogramms.

Er muss also beispielsweise weder selbständig das Mischungsverhältnis einstellen noch die Einwirkdauer verlängern, sollte er ein schwächeres Reinigungs-/Entkalkungsmittel verwenden als empfohlen. Vielmehr übernimmt das Gerät mithilfe der für das gewählte Produkt vorab gespeicherten Parameter die Einstellung aller erforderlichen und/oder günstigen Parameter, um das Verfahren beispielsweise nicht nur effizient, sondern auch möglichst umweltschonend durchzuführen.

Um dem Benutzer die Eingabe des von ihm vorgesehenen Reinigungs-/Entkalkungsmittels zu erleichtern, können ihm nach dem Einschalten des Geräts und Aufrufen des Menüpunkts 'Reinigen/Entkalken' zum Beispiel verschiedene Reinigungs-/Entkalkungsmittel in einer Wiedergabeeinheit am Gerät zur Wahl gestellt werden, so dass er das vorgesehene Mittel lediglich auszuwählen braucht. Hat der Benutzer unter den wiedergegebenen Reinigungs-/Entkalkungsmitteln dasjenige auswählt, das er verwenden will, bestätigt er seine Auswahl z. B. durch Starten des Programms.

Anstelle der Auswahl aus einer Wiedergabe kann der Benutzer alternativ zum Beispiel einen Identifikationscode für das von ihm gewählte Reinigungs-/Entkalkungsmittel eingeben. Die Eingabe kann manuell oder akustisch erfolgen. Die Eingabe kann für den Benutzer alternativ durch Maschinenunterstützung vereinfacht werden, beispielsweise optisch durch eine Objekt-, Schrift-, Barcode- oder QR-Code-Erkennung. Die Erkennung kann kamerabasiert erfolgen, wobei die Kamera bzw. ein Scanner am Gerät oder in einer Anwendung eines Smartphones ("App") zum Einsatz kommen kann. Alternativ kann sie per Funk erfolgen, beispielsweise durch Erfassen eines NFC- oder eines anderen RFID-Codes, wiederum durch das Heißgetränkegerät selbst oder in einer App.

In Schritt c) führt nun das Gerät das Serviceprogramm basierend auf der Angabe des Produkts, das der Benutzer für das Serviceprogramm ausgewählt hat, aus.

Ganz allgemein läuft ein Serviceprogramm standardmäßig ab und ist im Wesentlichen in die drei Haupt-Prozessschritte ,Auflösen/Verdünnen', ,Einwirkenlassen' und 'Ausspülen' unterteilt. Das ,Auflösen/Verdünnen' kann in Abhängigkeit vom Aggregatzustand des Reinigungs-/Entkalkungsmittels, insbesondere von Verpressungsgrad oder Körnung fester Mittel, oder der Konzentration flüssiger Mittel, unterschiedlich lange dauern. Das ,Einwirkenlassen' dient dem Lösen von Schmutz bzw. Kalkablagerungen und dauert je nach Effizienz des Mittels unterschiedlich lange. Beim 'Ausspülen' werden die gelösten Verunreinigungen und die dafür eingesetzten Mittel aus den Fluidwegen herausgespült. Jedem der Prozessschritte lassen sich Parameter zur Durchführung des Verfahrens zuordnen.

Gemäß einer vorteilhaften Ausgestaltung der Erfindung ruft das Gerät nach der Angabe des zu verwendenden Reinigungs-/Entkalkungsmittels in Schritt b) einen bestimmten Parametersatz für die Durchführung eines Serviceprogramms auf. Der Parametersatz ist dem benutzerseitig ausgewählten und zu verwendenden Reinigungs-/Entkalkungsmittel zugeordnet und betrifft beispielsweise die Auflösedauer, die Konzentration, die erreicht werden soll, eine Einwirkzeit des Reinigungs-/Entkalkungsmittels, eine Durchflusszeit einer Reinigungs-/Entkalkungslösung, deren Temperatur, eine Menge an Wasser, mit der gespült werden soll, oder andere für die Durchführung des Serviceprogramms relevanten Parameter.

Das Aufrufen des bestimmten Parametersatzes erfolgt geräteseitig aus einem Parameterspeicher, in dem werkseitig mit dem jeweiligen Reinigungs-/Entkalkungsmittel individuell verknüpfte Parameter des Serviceprogramms abgespeichert wurden. Der Benutzer braucht folglich eine Anpassung des Serviceprogramms an das verwendete Mittel nicht selbst vorzunehmen, womit er regelmäßig überfordert wäre. Vielmehr stellt das Heißgetränkegerät diejenigen Parameter zur Verfügung, die bei dem jeweiligen Mittel das beste Reinigungs- und/oder Entkalkungsergebnis erwarten lässt. Die Parameter des jeweiligen Reinigungs-/Entkalkungsmittels hat der Hersteller vorab durch Versuchsreihen ermittelt und abgespeichert.

Für einen Fremdprodukt kann ein Standardparametersatz geräteseitig hinterlegt sein, der sich aus großzügig gewählten Parametern zusammensetzt. Um aber eine effiziente Durchführung des Serviceprogramms zu ermöglichen, kann der Heißgetränkebereiter bei einer benutzerseitigen Auswahl eines Fremdprodukts eine detailliertere Abfrage zu seinen Eigenschaften starten, beispielsweise nach seiner Darreichungsform als Tablette, als Pulver oder als Flüssigkeit. Daran kann sich eine Abfrage nach der Menge zum Beispiel in Gramm beziehungsweise Millilitern anschließen etc. Den daraus erhaltenen Angaben zum Fremdprodukt können dann jeweils geeignete Parameter zugeordnet werden, so dass für das Fremdprodukt geräteseitig ein individueller und geeigneter Parametersatz zusammengestellt werden kann.

Sollte eine nutzerseitige Eingabe ein ungeeignetes Reinigungs-/Entkalkungsmittel ergeben, kann das Gerät zu seinem Schutz eine entsprechende Anzeige ausgeben. Möchte ein Benutzer beispielsweise reine Zitronensäure in flüssiger Form einsetzen, kann das Gerät die Meldung ausgeben: "Die Verwendung wird für dieses Gerät nicht empfohlen".

Vorteilhafterweise kann sich der Parametersatz, den eine Steuereinheit des Geräts für ein bestimmtes Reinigungs-/Entkalkungsmittel aufruft, in nur einem einzigen Parameter - wie beispielsweise der Einwirkdauer - von einem Parametersatz, der für ein anderes auswählbares Reinigungs-/Entkalkungsmittel vorhanden ist, unterscheiden. Dadurch kann eine gewisse Zeitersparnis gelingen, da die Anpassung von nur einem Parameter durch das Gerät unkompliziert ist und nicht lange dauert.

Bei geräteseitig bekannten Reinigungs-/Entkalkungsmitteln kann in der Regel bereits bei deren Wiedergabe eine Gesamtdauer für das in Schritt c) auszuführende Serviceprogramm angezeigt werden. Anderenfalls, bei anderen Auswahlverfahren, z. B. bei obiger Strickcodeerfassung oder dergl. und insbesondere bei Fremdprodukten kann nach einer weiteren vorteilhaften Ausgestaltung nach der Auswahl, und Angabe eines Reinigungs-/Entkalkungsmittels in Schritt b) oder nach einer evtl. Detaillierung seiner Eigenschaften eine Gesamtdauer für das in Schritt c) auszuführende Serviceprogramm angezeigt werden. Somit wird der Verfahrensschritt c) durch die erfasste benutzerseitige Eingabe in Schritt b) hinsichtlich seiner Gesamtdauer festgelegt. Dem Benutzer wird also nach Angabe des zu verwendenden Reinigungs-/Entkalkungsmittels eine ggf. veränderte Gesamtdauer am Gerät angezeigt. Damit erhält der Benutzer die Information, wann ihm das Gerät wieder für eine Getränkezubereitung zur Verfügung steht.

Die Anzeige der Gesamtdauer kann zum Beispiel direkt in der Wiedergabeeinheit, z. B. einem Display, erfolgen und unmittelbar nach Angeben des zu verwendenden Reinigungs-/Entkalkungsmittels erscheinen. Alternativ oder zusätzlich kann die Gesamtdauer in derjenigen App angezeigt werden, in der auch die Eingabe des zu verwendenden Reinigungs-/Entkalkungsmittels erfolgte.

Vorteilhafterweise wird Schritt c) erst ausgeführt, wenn das ausgewählte Reinigungs-/Entkalkungsmittel nach Anzeigen seiner Gesamtdauer erneut durch eine benutzerseitige Eingabe bestätigt wird.

Der Benutzer kann somit auch anhand der angezeigten Gesamtdauer entscheiden, welches Reinigungs-/Entkalkungsmittel er - ggf. bei einem späteren Servicevorgang - verwenden möchte. Erscheint ihm eine angezeigte Gesamtdauer zu lang, so kann er ein anderes Produkt wählen.

Als weitere Ausgestaltungsform kann der Benutzer in umgekehrter Weise zuerst eine gewünschte Zeitdauer für das Serviceprogramm angeben, infolgedessen ein oder mehrere dafür geeignete Reinigungs-/Entkalkungsmittel vorgeschlagen werden. Die Zeitdauer kann dabei als Maximalzeitdauer, d. h. als maximal zur Verfügung stehende Zeit, angegeben werden. Diese Variante ist besonders im Vorfeld einer Einkaufsentscheidung von Vorteil, wenn ein zur Verfügung stehendes begrenztes Zeitfenster für die Durchführung des Serviceprogramms als Grundlage für die Kaufentscheidung des Reinigungs-/Entkalkungsmittels dienen soll.

Nach einer weiteren vorteilhaften Ausgestaltung kann diese Information über eine Anwendung an einem Smartphone ("App") abgerufen werden. Der Benutzer kann dann seine Entscheidung über das zu beschaffende Reinigungs-/Entkalkungsmittels räumlich unabhängig vom Heißgetränkebereiter zum Beispiel unmittelbar beim Einkauf treffen.

Nach einer weiteren vorteilhaften Ausgestaltung folgt dem obigen Schritt c) ein Schritt d), in welchem die Entkalkungsleistung des aktuellen Servicevorgangs erkannt, gegebenenfalls gespeichert, mit einem erwarteten Ergebnis verglichen und eine dem Ergebnis des Vergleichs entsprechende Anzeige ausgegeben wird. Ein solcher Schritt d) erfolgt insbesondere dann, wenn in Schritt b) ein fremdes Produkt, z. B. im Display als 'Andere' bezeichnet, ausgewählt wurde. Dies hat den Vorteil, dass der Benutzer die Effizienz des dem Gerät unbekannten Produkts nach Abschluss des Serviceprogramms direkt ablesen kann.

Programme zur Erkennung der Entkalkungsleistung sind bekannt aus der EP 2 080 461 B1, DE 10 2019 217 640 A1 und der EP 4 033 161 A1.

Nach einer weiteren vorteilhaften Ausgestaltung wird nach dem Erkennen und gegebenenfalls Speichern der Entkalkungsleistung diese mit einem erwarteten Ergebnis verglichen und bei einem entsprechenden folgenden Serviceverfahren in Abhängigkeit von dem Vergleich mindestens ein Parameter des Verfahrens angepasst. In dieser Ausgestaltung "Iernt" das Gerät die tatsächliche Entkalkungsleistung eines Reinigungs-/Entkalkungsmittels kennen. Das Gerät verwendet zur erstmaligen Durchführung des Serviceverfahrens einen vordefinierten Standardsatz an Parameterwerten und passt in einem darauffolgenden Verfahren mit demselben Reinigungs-/Entkalkungsmittel einen oder mehrere Parameter des Serviceverfahrens so an, dass ein für das Gerät optimales Serviceergebnis erreicht wird.

Eine Abweichung vom erwarteten Ergebnis kann sich daraus ergeben, dass ein Fremdprodukt als Reinigungs-/Entkalkungsmittel verwendet wurde, das herstellerseitig nicht bekannt ist, für das also keine Parameterwerte ermittelt wurden und das daher geräteseitig nicht vorgeschlagen wird.

Damit können auch unbekannte Reinigungs-/Entkalkungsmittel mit größtmöglicher Sicherheit vor Gerätebeschädigungen verwendet werden.

Abweichungen vom erwarteten Ergebnis können sich auch bei Auswahl eines an sich bekannten Reinigungs-/Entkalkungsmittels durch herstellerseitig unerwartete oder geräteseitig nicht berücksichtigte Umgebungs- oder sonstige Randbedingungen ergeben, beispielsweise durch eine stark vom Üblichen abweichende Wasserhärte, eine ungewöhnliche Wassertemperatur, eine Änderung der Rezeptur des Reinigungs-/Entkalkungsmittels oder die absolute Höhe des Aufstellungsorts des Gerätes über Normal-Null. Auch derartige Änderungen können also erfindungsgemäß erfasst und berücksichtigt werden. Wiederum können Umweltaspekte wie Wasser- und Stromverbrauch berücksichtigt werden.

Der Benutzer jedenfalls muss keinerlei Einstellungen vornehmen, sodass er keine Sachkenntnis benötigt, wenn er ein neues Reinigungs-/Entkalkungsmittel seiner Wahl verwenden möchte oder um abweichende Bedingungen zu berücksichtigen. Vielmehr optimiert das Gerät sein Serviceprogramm selbst, so dass eine effiziente Entkalkung gewährleistet und Schäden an Dichtungen oder ähnlichem im Gerät vermieden werden.

Vorteilhaft kann der der Schritt d) zur Erkennung der Entkalkungsleistung nur bei der Auswahl bzw. Angabe eines Fremdprodukts durchgeführt. Dabei ist ein Fremdprodukt ein Reinigungs-/Entkalkungsmittel, das der Heißgetränkebereiter nicht kennt und daher von sich aus nicht vorschlägt. Wird die Entkalkungsleistung nur bei der Durchführung des Serviceverfahrens mit einem Fremdprodukt durchgeführt, kann sich der Programmablauf zumindest für das Gerät verkürzen, auch wenn der Benutzer davon evtl. keinen Zeitgewinn hat.

Nach einer weiteren vorteilhaften Ausgestaltung kann es sich bei dem Parameter, der in Abhängigkeit von einem Vergleich der erzielten bzw. erwarteten Entkalkungsleistungen in einem entsprechenden Folgeverfahren angepasst wird, zum Beispiel um das Mischverhältnis von Reinigungs-/Entkalkungsmittel zu Wasser im Prozessschritt 'Auflösen/Verdünnen', um die Einwirkdauer der Reinigungs-/Entkalkungslösung im Prozessschritt ,Einwirkenlassen', um die Temperatur der einwirkenden Reinigungs-/Entkalkungslösung und/oder um ein Serviceintervall handeln. Sollte beispielsweise die Entkalkungsleistung schlechter sein als erwartet, so kann das Mischverhältnis dahingehend angepasst werden, dass die Konzentration an Entkalkungsmittel höher ist. Ebenso kann das Mischverhältnis beibehalten werden und die Einwirkdauer länger gewählt werden. Eine Temperaturerhöhung kann ebenfalls zu einer Erhöhung der Entkalkungsleistung führen, so dass bereits eine Anpassung von nur einem der Parameter zu einer Anpassung der Gesamt-Entkalkungsleistung führt; eine Anpassung mehrerer Parameter gleichzeitig kann sowohl einen additiven als auch synergistischen Effekt auf die Entkalkungsleistung haben.

Sollen alle oben genannten Parameter beibehalten werden, so kann auch das Zeitintervall zwischen der Entkalkung mit der erkannten Entkalkungsleistung und dem folgenden Entkalkungsverfahren verkürzt oder verlängert werden. Wurde die Entkalkungsleistung zum Beispiel als unerwartet gut eingestuft, so kann bei vergrößertem Zeitintervall bis zur nächsten Entkalkung neben Entkalkungsmittel auch Wasser und Energie eingespart werden.

Die der Erfindung zugrundeliegende Aufgabe wird auch durch einen Heißgetränkebereiter mit einer Aktivierungseinheit, einer Eingabeeinheit und einer Steuereinheit gelöst, wobei der Heißgetränkebereiter erfindungsgemäß eine Speichereinheit umfasst, die eine Verknüpfung von Reinigungs-/Entkalkungsmitteln und zugehörigen Serviceprogrammen bzw. Parametersätzen enthält, die die jeweiligen Serviceprogramme definieren. Der Heißgetränkebereiter ist zur Durchführung des oben genannten Verfahrens geeignet.

Der Heißgetränkebereiter dient der automatischen Zubereitung von Heißgetränken, beispielsweise als Kaffeevollautomat oder als Kapsel- oder Kaffeepadmaschine, vorzugsweise im häuslichen Gebrauch. Gerade für Benutzer, die geringe oder keine Kenntnisse über technische, insbesondere verfahrenstechnische Zusammenhänge haben, ist es von enormem Vorteil, wenn der Heißgetränkebereiter eine Verknüpfung von konkreten Reinigungs-/Entkalkungsmitteln mit jeweils daran angepassten Serviceprogrammen bietet, so dass optimale Servicevorgänge ablaufen, und zwar lediglich durch Angabe des jeweiligen Reinigungs-/Entkalkungsmittels.

Die Aktivierungseinheit des Heißgetränkebereiters ist allgemein eine Vorrichtung zum Inbetriebsetzen des Geräts, zum Beispiel durch Drücken, Drehen, Berühren oder durch ein akustisches Signal. Möglich ist ebenso eine Aktivierung durch ein externes Gerät, wie zum Beispiel über eine Anwendung in einem Smartphone ("App").

Die Eingabeeinheit kann auf vielfältige Weise ausgestaltet sein und beinhaltet eine Benutzerschnittstelle, über die ein Benutzer eine Eingabe machen kann. Die Eingabe kann über eine geräteseitige Benutzeroberfläche zum Beispiel mit Knöpfen und/oder mit einem Touchscreen erfolgen. Alternativ oder zusätzlich kann die benutzerseitige Auswahl und Eingabe über ein externes bzw. gerätefernes Bedienfeld, wie zum Beispiel über eine Anwendung in einem Smartphone ("App") oder einem anderen mobilen Gerät, oder durch ein akustisches Signal möglich sein. Alternativ kann das Heißgetränkegerät mit einer Kamera bzw. einem Scanner oder einer Vorrichtung zur Erfassung eines NFC- oder eines anderen RFID-Codes ausgestattet sein, um eine Eingabe des Benutzers bezüglich der Auswahl des Reinigungs-/Entkalkungsmittels zu erfassen.

Die Benutzerschnittstelle kann außerdem eine Wiedergabeeinheit beinhalten, die dem Benutzer zum Beispiel verschiedene Reinigungs-/Entkalkungsmittel am Gerät präsentiert und zur Wahl stellt, so dass er das vorgesehene Mittel lediglich auszuwählen braucht.

Die Wiedergabe kann sowohl bildlich, schriftlich als auch akustisch erfolgen. Dabei können dem Benutzer sowohl Reinigungs-/Entkalkungsmittel einer Eigenmarke als auch diejenigen anderer Hersteller zur Auswahl stehen. Es kann sich jeweils um feste Mittel in Form von Tabletten oder Pulver oder um flüssige Reinigungs-/Entkalkungsmittel handeln.

Die Steuereinheit ist ein zentraler Bestandteil des im Heißgerätebereiter befindlichen Computers und steuert sämtliche Funktionen wie beispielsweise die Heizvorgänge oder die Wassereinspeisung, Pump- und Ausgabevorgänge und alle weiteren Vorgänge der Zubereitungs- und Serviceprogramme.

Erfindungsgemäß umfasst der Heißgetränkebereiter eine Speichereinheit, die eine Verknüpfung von Reinigungs-/Entkalkungsmitteln und zugehörigen Serviceprogrammen enthält. Die Speichereinheit enthält jeweils einen spezifischen Parametersatz für die Durchführung eines Serviceprogramms, das verknüpft ist mit einem jeweils auswählbaren Reinigungs-/Entkalkungsmittel. Der Parametersatz ist also dem ausgewählten, zu verwendenden Reinigungs-/Entkalkungsmittel zugeordnet und betrifft beispielsweise die Auflösedauer, die Konzentration, die Einwirkzeit, die Durchflusszeit, die Temperatur, die Spülmenge an Wasser oder andere für die Durchführung des Serviceprogramms relevante Parameter. Somit ist es erstmals möglich, ein oben beschriebenes Verfahren durchzuführen, bei welchem ein bestimmtes Reinigungs-/Entkalkungsprogramm (Serviceprogramm) in Abhängigkeit von einem ausgewählten Reinigungs-/Entkalkungsmittel ausgeführt wird, ohne dass der Benutzer selbst weitere Einstellungen übernehmen muss.

Nach einer weiteren vorteilhaften Ausgestaltung umfasst die Eingabeeinheit des Heißgetränkebereiters eine Benutzeroberfläche, in der sich mithilfe der oben erwähnten Wiedergabeeinheit verschiedene Reinigungs-/Entkalkungsmittel zur benutzerseitigen Auswahl anzeigen lassen. Die Anzeige kann zum Beispiel schriftlich und/oder bildlich erfolgen. Dies macht es einem Benutzer besonders einfach, ein zum Reinigungs-/Entkalkungsmittel passendes Serviceprogramm vom Heißgetränkebereiter durchführen zu lassen, da er lediglich aus den Anzeigen auszuwählen braucht.

Nach einer weiteren vorteilhaften Ausgestaltung umfasst der Heißgetränkebereiter eine Vorrichtung zur Erkennung der Entkalkungsleistung, wie beispielsweise beschrieben in EP 2080461 B1, DE 102019217640 A1 oder EP 4033161 A1. Darin wird entweder anhand von sich ändernden Temperaturdifferenzen oder anhand sich änderndem zeitlichen Verhalten, z. B. erhöhte Dauer bis ein Temperaturwert erreicht wird, ein Verkalkungszustand ermittelt. Der Heißgetränkebereiter verfügt darüber hinaus über eine Vergleichseinheit, in der die erkannte Entkalkungsleistung mit einer erwarteten Entkalkungsleistung verglichen wird und das Ergebnis des Vergleichs für einen nachfolgenden Entkalkungsvorgang verarbeitet wird. Aufgrund des Ergebnisses des Vergleichs passt die Steuereinheit die Parameter für einen nachfolgenden Entkalkungsvorgang an und speichert sie.

Das Gerät kann somit die Entkalkungsleistung eines Fremdprodukts feststellen indem der Entkalkungsgrad erkannt wird und dieser Wert zur Beurteilung mit beispielsweise einem zuvor abgespeicherten Standardwert verglichen wird. Somit kann die Wirksamkeit des Fremdprodukts ermittelt werden und bei erneutem Einsatz zu einem gewünschten Ergebnis führen. Die für das Fremdprodukt ermittelten Daten können sich benutzerseitig kennzeichnen und abspeichern lassen, so dass auf sie in einem späteren Verfahren zurückgegriffen werden kann.

Die Erfindung optimiert effektiv die Reinigungs- bzw. Entkalkungsleistung, indem sie auf das jeweils verwendete Reinigungs-/Entkalkungsmittel abgestimmt wird, und verkürzt dadurch gegebenenfalls die Dauer des Reinigungs-/Entkalkungsablaufs. Aufgrund der verbesserten Reinigungs- bzw. Entkalkungsleistung wird die Lebenszeit eines Heißgetränkebereiters verlängert und die Umwelt geschont.

Das Prinzip der Erfindung wird im Folgenden anhand einer Zeichnung beispielshalber noch näher erläutert. In der Zeichnung zeigen:
- Figur 1:: ein Ablaufdiagramm eines ersten erfindungsgemäßen Verfahrens,
- Figur 2:: ein Ablaufdiagramm eines zweiten erfindungsgemäßen Verfahrens, und
- Figur 3:: einen schematischen Aufbau eines erfindungsgemäßen Heißgetränkebereiters

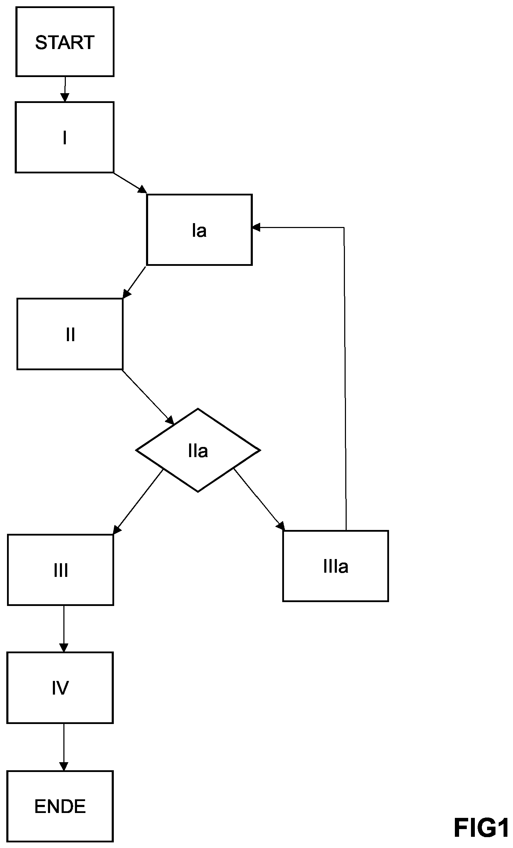

Figur 1 zeigt ein Ablaufdiagramm des erfindungsgemäßen Verfahrens, bei welchem ein Benutzer ein Reinigungs-/Entkalkungsmittel aus einer Reihe von Produkten, die dem Gerät bekannt sind, auswählt.

Zunächst wird das Gerät von einem Benutzer mittels eines Start-Knopfes am Gerät oder einer anderer Einschaltvorrichtung eingeschaltet. Nach Inbetriebnahme des Geräts begibt sich der Benutzer in einem Schritt I in den Menüpunkt "Reinigen/Entkalken", wodurch das Serviceverfahren aktiviert wird. Dies kann zum Beispiel durch Drücken eines entsprechenden Knopfes oder einer Taste geschehen.

Eine Benutzeroberfläche am Gerät zeigt dann mithilfe einer Wiedergabeeinheit in Schritt la verschiedene dem Gerät bekannte und zur Auswahl stehende Reinigungs-/Entkalkungsmittel an. Die Auswahl kann mittels Softwareupdate stetig um neue Produkte erweitert werden. Sie bietet auch eine Option für unbekannte Reinigungs-/Entkalkungsmittel an, die beispielsweise mit 'Andere' bezeichnet ist. Die bekannten Reinigungs-/Entkalkungsmittel können sowohl Eigenprodukte des Herstellers des Geräts sein als auch Produkte von anderen Herstellern. Für die bekannten Reinigungs-/Entkalkungsmittel wurden jeweils durch vorab durchgeführte Versuchsreihen geeignete Parameter im Gerät abgespeichert, die einen Verfahrensablauf zum Reinigen und/oder Entkalken des Geräts bestimmen.

Die Anzeige kann zum Beispiel aus Abbildungen der bekannten Produkte und aus deren Bezeichnung bestehen. Der Benutzer wählt nun aus einem der angezeigten Reinigungs-/Entkalkungsmittel eines aus, indem er in Schritt II auf der geräteseitigen Benutzeroberfläche eine Eingabe macht, beispielsweise durch Berühren eines berührempfindlichen Bildschirms der Benutzeroberfläche.

Daraufhin zeigt die Wiedergabeeinheit in einem Schritt Ila die Gesamtdauer des für dieses ausgewählte Produkt vorgesehenen und gespeicherten Serviceprogramms an. Anhand dieser Information kann der Benutzer seine aktuelle oder eine spätere Wahl des Reinigungs-/Entkalkungsmittel ausrichten.

Ist der Benutzer mit der angezeigten Zeitdauer einverstanden, bestätigt er seine Eingabe von Schritt II durch eine erneute Eingabe in Schritt III, indem er zum Beispiel wiederum den Touchscreen an der seiner Wahl entsprechenden Stelle berührt.

Ist der Benutzer mit der in Schritt Ila angezeigten Gesamtdauer nicht einverstanden und bestätigt seine in Schritt II gemachte Eingabe nicht, so kehrt das Gerät nach einer definierten Zeitdauer von beispielsweise 5 Sekunden wieder zu Schritt la zurück und zeigt erneut die zur Auswahl stehenden Reinigungs-/Entkalkungsmittel einschließlich der Option für ,Andere' an.

Hat der Benutzer seine Wahl getroffen und in Schritt III angegeben, führt der Heißgetränkebereiter daraufhin in Schritt IV das dem ausgewählten Reinigungs-/Entkalkungsmittel entsprechende Serviceprogramm mit den im Gerät abgespeicherten Parametern selbständig durch. Der Benutzer muss dafür keinerlei weiteren Schritte vornehmen, denn mit der Auswahl des Reinigungs-/Entkalkungsmittels hat er dem Gerät mittelbar bereits diejenigen Parameter zur Durchführung des Serviceprogramms mitgeteilt, die bezogen auf das jeweilige ausgewählte Reinigungs-/Entkalkungsmittel ein optimales Serviceergebnis erwarten lässt.

Ist das Serviceverfahren beendet, fordert das Gerät den Benutzer zu Servicetätigkeiten wie Entleeren einer Restwasserschale und/oder Spülen eines Wasservorratsbehälters auf und schaltet sich danach entweder direkt selbst ab oder kehrt für eine gewisse Zeit in einen Bereitschaftsmodus zurück.

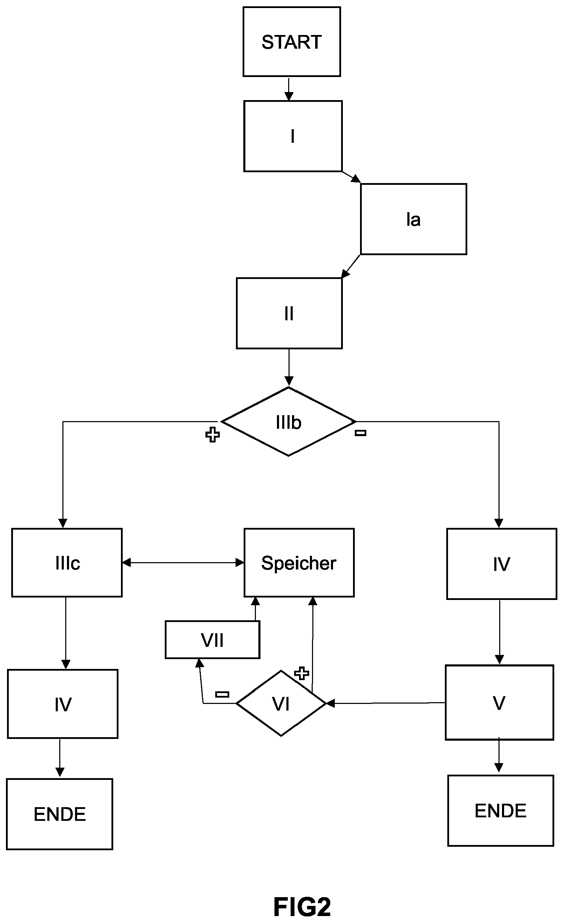

Figur 2 zeigt ein Ablaufdiagramm eines erfindungsgemäßen Verfahrens, bei welchem ein Benutzer ein dem Gerät unbekanntes Reinigungs-/Entkalkungsmittel verwenden möchte.

Wie im Verfahren, das oben anhand von Figur 1 beschrieben ist, schaltet der Benutzer das Gerät ein und aktiviert in einem Schritt I im Gerätemenü das Serviceprogramm 'Reinigen/Entkalken'.

Wie nach Figur 1 werden dann in Schritt la verschiedene Reinigungs-/Entkalkungsmittel angezeigt, die sowohl Eigenprodukte des Herstellers sein können als auch Produkte von anderen Herstellern, für welche jeweils durch vorab durchgeführte Versuchsreihen Parameter im Gerät abgespeichert wurden. Ebenso wird eine Option für unbekannte Fremdprodukte angezeigt, für welche noch keine spezifischen Parameter abgespeichert wurden, zum Beispiel angezeigt als 'Andere'.

Wählt der Benutzer jetzt die Option 'Andere' und macht die entsprechende Eingabe in Schritt II, wird in Schritt Illb Parametergeprüft, ob im Parameterspeicher bereits Werte oder Daten aus einem vorangegangenen Verfahren mit einem Fremdprodukt vorliegen.

Wird dies seitens des Parameterspeichers verneint ("-"), führt das Gerät in Schritt IV ein Serviceprogramm mit im Gerät für diesen Fall abgespeicherten Standardparametern durch. Sie sind werkseitig auf Grundlage von Versuchen festgelegt.

Im darauffolgenden Schritt V wird mithilfe eines Programms zur Erfassung der Entkalkungsleistung die Entkalkungsleistung des zuletzt durchgeführten Serviceprogramms ermittelt und in Schritt VI in einer Vergleichseinheit mit einem vorab definierten Serviceergebnis verglichen.

Ergibt der Vergleich in Schritt VI, dass die Entkalkungsleistung in Ordnung war (Symbol "+"), so werden die Standardparameter, welche für das Fremdprodukt im Serviceverfahren angewandt wurden, unverändert für die Verwendung eines nächsten Fremdprodukts belassen und hinterlegt.

Ergibt der Vergleich in Schritt VI, dass die Entkalkungsleistung nicht ausreichend, also schlechter war (Symbol "-"), so werden die angewandten Standardparameter in einem Schritt VII angepasst und die angepassten Parameter für die nächste Verwendung eines/des Fremdprodukts im Speicher abgespeichert. Ein Fremdprodukt kann auch zusammen mit dem zugehörigen, angepassten Prozess individualisiert abgespeichert werden, so dass das Fremdprodukt bei einer folgenden Verwendung wiedererkannt wird und sich somit eine individualisierte Geräteeinstellung ergibt.

Ist das Serviceverfahren beendet, fordert das Gerät den Benutzer zu Servicetätigkeiten wie Entleeren einer Restwasserschale und/oder Spülen eines Wasservorratsbehälters auf und schaltet sich danach entweder direkt selbst ab oder für eine gewisse Zeit in einen Bereitschaftsmodus.

Wenn in Schritt Illb hingegen festgestellt wird, dass bereits Werte aus einem vorangegangenen Verfahren mit einem Fremdprodukt vorliegen ("+"), so werden diese Werte in Schritt Illc aus dem Speicher abgerufen, und das Serviceverfahren wird in Schritt IV mit den hinterlegten Parameterwerten durchgeführt. Wahlweise (nicht eingezeichnet) kann auch hiernach in einem Schritt V mithilfe eines Programms zur Erfassung der Entkalkungsleistung die Entkalkungsleistung ermittelt und in einem Schritt VI mit einem vorher definierten Serviceergebnis verglichen und die verwendeten Parameterwerte angepasst und dann gegebenenfalls abgespeichert werden.

Nach geräteseitiger Durchführung des Serviceverfahrens in Schritt IV fordert das Gerät den Benutzer zu Servicetätigkeiten wie Entleeren einer Restwasserschale und/oder Spülen eines Wasservorratsbehälters auf und schaltet sich danach entweder direkt selbst ab oder für eine gewisse Zeit in einen Bereitschaftsmodus.

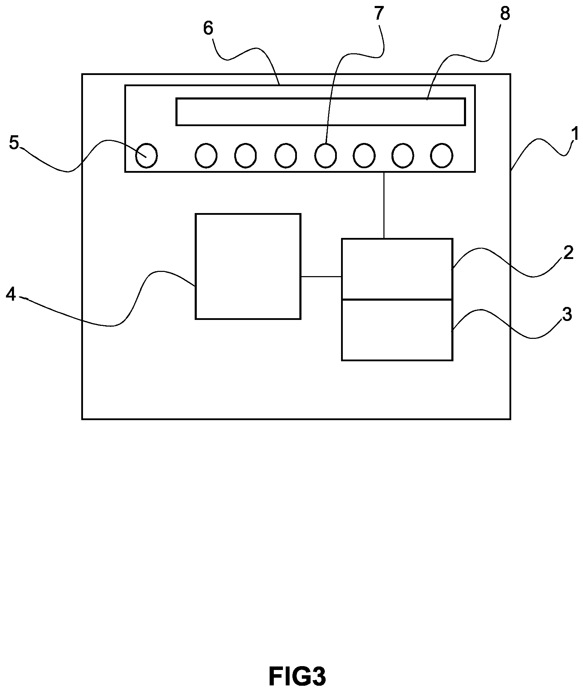

Figur 3 zeigt einen schematischen Aufbau eines erfindungsgemäßen Heißgetränkebereiters 1 als Kaffeemaschine, welcher zur Durchführung des erfindungsgemäßen Verfahrens geeignet ist.

Die Kaffeemaschine besitzt einen berührempfindlichen Bildschirm 6, auf welchem als Knöpfe 5, 7 dargestellte berührempfindliche Felder zu sehen sind. Der Startknopf 5, der die Kaffeemaschine 1 einschaltet, steht am äußersten linken Rand als Beginn einer rechts anschließenden Reihe von Auswahlknöpfen 7.

Der Bildschirm 6 beinhaltet auch ein rechteckiges Anzeigefeld 8, das dem Benutzer nach Einschalten des Geräts mehrere zur Auswahl stehende Reinigungs-/Entkalkungsmittel in Form von Produktbildern und/oder in Worten anzeigt. Unterhalb des Anzeigefeldes 8 sind auf dem Bildschirm 6 berührempfindliche Felder 7 als Knöpfe dargestellt, mittels derer sich eines der in der Anzeige 8 angezeigten Reinigungs-/Entkalkungsmittel auswählen und bestätigen lässt.

Die Kaffeemaschine 1 hat im Inneren eine Recheneinheit 2 und umfasst eine Speichereinheit 3, in welcher u.a. die Parameter abgespeichert sind. Die Recheneinheit 2 umfasst weiter eine Vergleichseinheit, in der gemessene Werte mit vorher festgelegten Werten verglichen werden, und eine Vorrichtung zur Erkennung der Entkalkungsleistung (beide nicht gezeigt), welche mit der Vergleichseinheit in Verbindung steht.

Außerdem umfasst die Kaffeemaschine 1 eine Steuereinheit 4. Die Steuereinheit 4 ist zentraler Bestandteil des in der Kaffeemaschine befindlichen Computers und steuert sämtliche Funktionen und Vorgänge der Zubereitungs- und Serviceprogramme.

Da es sich bei den vorhergehenden, detailliert beschriebenen Ausführungsformen um Beispiele handelt, können diese in üblicher Weise vom Fachmann in einem weiten Umfang modifiziert werden, ohne den Bereich der Erfindung zu verlassen. Insbesondere kann z. B. auch bei dem Gerät bekannten Reinigungs-/Entkalkungsmitteln eine Entkalkungsleistung erfasst werden, um Produkt- bzw. Rezeptänderungen zu erfassen und die Parameter entsprechend anpassen zu können, oder es kann die Anordnung von Bedienelementen in einer anderen Form ausgestaltet sein, wenn dies aus Platzgründen bzw. gestalterischen Gründen notwendig ist. Weiterhin schließt die Verwendung der unbestimmten Artikel "ein" bzw. "eine" nicht aus, dass die betreffenden Merkmale auch mehrmals oder mehrfach vorhanden sein können.

### Bezugszeichenliste

- I: Aktivierung des Serviceverfahrens
- Ia: Anzeige Reinigungs-/Entkalkungsmittel
- II: Eingabe durch Benutzer
- Ila: Anzeige Gesamtdauer
- III: Bestätigung durch Benutzer
- IIIa: keine Bestätigung durch Benutzer
- IIIb: Überprüfung, ob Werte aus vorangegangenen Verfahren vorliegen
- Illc: Abrufen von Werten
- IV: Ausführung Serviceprogramm
- V: Erkennung der Entkalkungsleistung
- VI: Vergleich von Entkalkungsleistungswerten
- VII: Änderung von Parameterwerten

- 1: Kaffeemaschine als Heißgetränkebereiter
- 2: Recheneinheit
- 3: Speichereinheit
- 4: Steuereinheit
- 5: Startknopf
- 6: Bildschirm
- 7: Auswahlknöpfe
- 8: Anzeigefeld

## Patentansprüche

1. Verfahren zur Reinigung und/oder Entkalkung eines Heißgetränkebereiters mit den Schritten:
a) Erfassen einer Aktivierungsaufforderung für das Verfahren zur Reinigung und/oder Entkalkung am Heißgetränkebereiter (I),
b) Erfassen einer benutzerseitigen Eingabe bzgl. des Verfahrens zur Reinigung und/oder Entkalkung (II),
c) Ausführen eines Reinigungs-/Entkalkungsprogramms, das der benutzerseitigen Eingabe (II) zugeordnet ist (IV),
**dadurch gekennzeichnet, dass** die benutzerseitige Eingabe (II) in der Angabe des zu verwendenden Reinigungs-/Entkalkungsmittels besteht.

2. Verfahren nach Anspruch 1, **dadurch gekennzeichnet, dass** nach Angabe des zu verwendenden Reinigungs-/Entkalkungsmittels (II) für das ausgewählte Reinigungs-/Entkalkungsmittel ein bestimmter Parametersatz zur Durchführung in Schritt c) vom Gerät aufgerufen wird.

3. Verfahren nach einem der obigen Ansprüche, **dadurch gekennzeichnet, dass** der Verfahrensschritt c) durch die erfasste benutzerseitige Eingabe (II) in Schritt b) hinsichtlich seiner Gesamtdauer festgelegt und angezeigt wird.

4. Verfahren nach einem der obigen Ansprüche, **dadurch gekennzeichnet, dass** nach dem Schritt c) in einem Schritt d) die Entkalkungsleistung erkannt, gespeichert, mit einem erwarteten Ergebnis verglichen (V, VI) und eine entsprechende Anzeige ausgegeben wird.

5. Verfahren nach einem der obigen Ansprüche, **dadurch gekennzeichnet, dass** nach dem Schritt c) in einem Schritt d) die Entkalkungsleistung erkannt, gespeichert, mit einem erwarteten Ergebnis verglichen wird (V, VI) und bei einem entsprechenden folgenden Reinigungs-/Entkalkungs-Verfahren in Abhängigkeit von dem Vergleich mindestens ein Parameter des Verfahrens angepasst wird (VII).

6. Verfahren nach Anspruch 5, **dadurch gekennzeichnet, dass** es sich bei den Parametern um ein Mischverhältnis, eine Einwirkdauer, eine Temperatur und/oder ein Entkalkungsintervall handelt.

7. Heißgetränkebereiter (1) mit einer Aktivierungseinheit (5), einer Eingabeeinheit und einer Steuereinheit, wobei der Heißgetränkebereiter eine Speichereinheit umfasst, die eine Verknüpfung von Reinigungs-/Entkalkungsmitteln und zugehörigen Reinigungs-/Entkalkungsprogrammen enthält, **dadurch gekennzeichnet, dass** der Heißgetränkebereiter (1) zur Durchführung eines Verfahrens nach einem der obigen Ansprüche eingerichtet ist.

8. Heißgetränkebereiter nach Anspruch 7, **dadurch gekennzeichnet, dass** es sich um einen Kaffeevollautomaten oder eine Kapselmaschine handelt.

9. Heißgetränkebereiter nach Anspruch 7 oder 8, **dadurch gekennzeichnet, dass** die Eingabeeinheit eine Benutzeroberfläche umfasst, in der sich verschiedene Reinigungs-/Entkalkungsmittel zur benutzerseitigen Auswahl anzeigen lassen.

10. Heißgetränkebereiter nach einem der Ansprüche 7 bis 9, **gekennzeichnet durch** eine Vorrichtung zur Erkennung der Entkalkungsleistung und durch eine Vergleichseinheit, die eingerichtet ist, die erkannte Entkalkungsleistung mit einer erwarteten Entkalkungsleistung zu vergleichen, wobei das Ergebnis des Vergleichs für einen nachfolgenden Entkalkungsvorgang abrufbar und verarbeitbar ist.

## Claims

1. Method for cleaning and/or descaling a hot beverage maker with the steps:
a) detecting an activation request for the method for cleaning and/or descaling at the hot beverage maker (I),
b) detecting an input by the user regarding the method for cleaning and/or descaling (II),
c) performing a cleaning/descaling program which is associated (IV) with the input (II) by the user,
**characterised in that** the input (II) by the user consists of the indication of the cleaning/descaling agent to be used.

2. Method according to claim 1, **characterised in that**, following indication of the cleaning/descaling agent (II) to be used, for the selected cleaning/descaling agent, a specific set of parameters is retrieved for performance in step c) by the appliance.

3. Method according to one of the above claims, **characterised in that** the method step c) is established and displayed by the detected input (II) by the user in step b) with regard to its total duration.

4. Method according to one of the above claims, **characterised in that**, after step c), the descaling efficiency is identified in step d), stored, compared (V, VI) with an expected result and a corresponding display is output.

5. Method according to one of the preceding claims, **characterised in that**, after step c), the descaling efficiency is identified in step d), stored, compared (V, VI) with an expected result and, in the case of a corresponding following cleaning/descaling method, at least one parameter of the method is adapted (VII) depending on the comparison.

6. Method according to claim 5, **characterised in that** parameters refer to a mixing ratio, a contact time, a temperature and/or a descaling interval.

7. Hot beverage maker (1) with an activation unit (5), an input unit and a control unit, wherein the hot beverage maker comprises a storage unit which contains a combination of cleaning/descaling agents and associated cleaning/descaling programs, **characterised in that** the hot beverage maker (1) is configured to perform a method according to one of the above claims.

8. Hot beverage maker according to claim 7, **characterised in that** it refers to a fully automatic coffee machine or a capsule machine.

9. Hot beverage maker according to claim 7 or 8, **characterised in that** the input unit comprises a user interface, in which different cleaning/descaling agents can be displayed for selection by a user.

10. Hot beverage maker according to one of claims 7 to 9, **characterised by** an apparatus for detecting the descaling efficiency and by a comparison unit which is configured to compare the detected descaling efficiency with an expected descaling efficiency, wherein the result of the comparison can be retrieved and processed for a subsequent descaling method.

## Revendications

1. Procédé de nettoyage et/ou de détartrage d'un dispositif de préparation de boissons chaudes, comprenant les étapes suivantes :
a) détection d'une demande d'activation pour le procédé de nettoyage et/ou de détartrage au niveau du dispositif de préparation de boissons chaudes (I),
b) détection d'une saisie d'utilisateur relative au procédé de nettoyage et/ou de détartrage (II),
c) exécution d'un programme de nettoyage/détartrage, qui est associé à la saisie (II) d'utilisateur (IV),
**caractérisé en ce que** la saisie d'utilisateur (II) consiste en l'indication du produit de nettoyage/détartrage à utiliser.

2. Procédé selon la revendication 1, **caractérisé en ce que**, d'après l'indication du produit de nettoyage/détartrage (II) à utiliser, un ensemble de paramètres spécifique au produit de nettoyage/détartrage choisi est récupéré par le dispositif pour l'exécution de l'étape c).

3. Procédé selon l'une des revendications précédentes, **caractérisé en ce que** l'étape c) est déterminée et affichée, quant à sa durée totale, en fonction de la saisie d'utilisateur détectée à l'étape b).

4. Procédé selon l'une des revendications précédentes, **caractérisé en ce qu'**après l'étape c), au cours d'une étape d), l'efficacité du détartrage est détectée, enregistrée, comparée (V, VI) avec un résultat attendu et une information correspondante est délivrée.

5. Procédé selon l'une des revendications précédentes, **caractérisé en ce qu'**après l'étape c), au cours d'une étape d), l'efficacité du détartrage est détectée, enregistrée, comparée (V, VI) avec un résultat attendu et qu'en fonction de cette comparaison, au moins un paramètre du procédé est adapté (VII) pour un prochain procédé de nettoyage/détartrage correspondant.

6. Procédé selon la revendication 5, **caractérisé en ce que** les paramètres comprennent un rapport de mélange, une durée d'action, une température et/ou un intervalle de détartrage.

7. Dispositif de préparation de boissons chaudes (1) comprenant une unité d'activation (5), une unité de saisie et une unité de commande, dans lequel le dispositif de préparation de boissons chaudes comprend une unité de mémoire, qui contient une correspondance entre des produits de nettoyage/détartrage et des programmes de nettoyage/détartrage correspondants,
**caractérisé en ce que** le dispositif de préparation de boissons chaudes (1) est configuré pour mettre en œuvre un procédé selon l'une des revendications précédentes.

8. Dispositif de préparation de boissons chaudes selon la revendication 7, **caractérisé en ce que** le dispositif est une machine à café automatique ou une machine à capsules.

9. Dispositif de préparation de boissons chaudes selon la revendication 7 ou 8, **caractérisé en ce que** l'unité de saisie comprend une interface utilisateur, dans laquelle différents produits de nettoyage/détartrage sont affichables en vue d'une sélection par l'utilisateur.

10. Dispositif de préparation de boissons chaudes selon l'une des revendications 7 à 9, **caractérisé par** un dispositif de détection de l'efficacité du détartrage et par une unité de comparaison, qui est configurée pour comparer l'efficacité du détartrage détectée à une efficacité du détartrage attendue, le résultat de la comparaison pouvant être récupéré et exploité pour un prochain processus de détartrage.
